Europäisches Patentamt

European Patent Office

Office européen des brevets

(19)

(11) **EP 0 744 339 B1**

## (12) FASCICULE DE BREVET EUROPEEN

(45) Date de publication et mention
de la délivrance du brevet:
**11.08.1999 Bulletin 1999/32**

(51) Int. Cl.$^6$: **B64D 29/06**

(21) Numéro de dépôt: **96401112.6**

(22) Date de dépôt: **22.05.1996**

(54) **Nacelle de moteur d'aéronef comportant un capot de nacelle**

Triebwerksgondel für Flugzeuge mit einer Gondelverkleidung

Aircraft engine nacelle with a nacelle cowling

(84) Etats contractants désignés:
**DE GB**

(30) Priorité: **24.05.1995 FR 9506206**

(43) Date de publication de la demande:
**27.11.1996 Bulletin 1996/48**

(73) Titulaire:
**AEROSPATIALE Société Nationale Industrielle
75781 Paris Cédex 16 (FR)**

(72) Inventeur: **Marche, Hervé
31120 Roquettes (FR)**

(74) Mandataire:
**Dubois-Chabert, Guy et al
Société de Protection des Inventions
25, rue de Ponthieu
75008 Paris (FR)**

(56) Documents cités:
**EP-A- 0 126 840          WO-A-93/06006
US-A- 2 494 347          US-A- 5 203 525**

## Description

Domaine technique

La présente invention concerne une nacelle d'un moteur d'aéronef comportant un ou plusieurs capots de nacelle.

Les capots de nacelle permettent d'accéder à l'intérieur de la nacelle qui contient généralement des équipements ou accessoires du moteur. L'invention vise à améliorer la fermeture et l'ouverture des capots et en particulier à améliorer la coïncidence des bords adjacents du capot et de la nacelle et des éléments complémentaires de fermeture qu'ils comportent.

L'invention s'applique à tout type de moteur ou propulseur d'aéronef comportant une nacelle. Elle s'applique en particulier aux réacteurs et aux turboréacteurs.

Etat de la technique antérieure

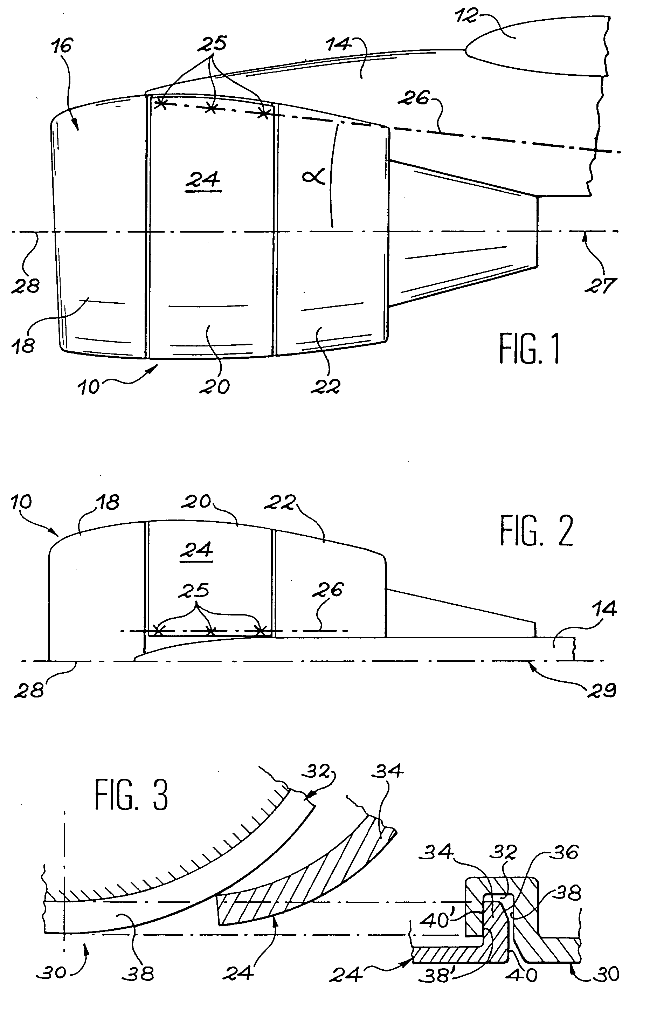

Comme le montre la figure 1, qui est une vue schématique d'un propulseur d'aéronef 10 suspendu à un élément de voilure 12, partiellement représenté, par un mât 14, la nacelle 16 du moteur 10 comporte en général trois parties. Une partie avant 18 forme une bouche d'entrée d'air pour canaliser un flux d'air entrant par exemple vers une soufflante, non représentée, du moteur. Vient ensuite une partie centrale 20 puis une partie arrière 22.

Dans l'ensemble du texte les termes avant et arrière de la nacelle ou du moteur s'entendent par rapport au sens d'écoulement du flux d'air créé par le moteur en fonctionnement. L'avant de la nacelle correspond donc à l'entrée d'air et l'arrière à la sortie d'air du moteur.

L'enveloppe extérieure de la partie intermédiaire 20 est formée par un ou plusieurs capots 24. Sur la figure 1, un seul capot 24 est visible. Il est fixé de manière pivotante au mât de support 14 du moteur, à l'aide de plusieurs articulations 25, agencées selon un axe d'articulation 26. Le capot 24 s'étend quasiment sur une demi-circonférence de la nacelle à partir du mât de support 14.

En raison de la forme de la nacelle, et notamment de la courbure de sa paroi extérieure dans le sens de l'axe du moteur, selon des lignes aérodynamiques, l'axe d'articulation 26 forme un angle $\alpha$ ouvert vers l'avant du moteur, avec un premier plan 27 perpendiculaire à un second plan médian du mât et contenant l'axe 28 du moteur. Les premier et deuxième plans coïncident sensiblement avec un plan horizontal et un plan vertical respectivement et leur intersection est parallèle à l'axe du moteur lorsque ce dernier est monté sur le mât tel que représenté sur la figure.

La figure 2 qui est une vue de dessus du moteur de la figure 1, montre que l'axe d'articulation 26 est, dans les moteurs connus, parallèle au deuxième plan médian du mât, qui porte la référence 29.

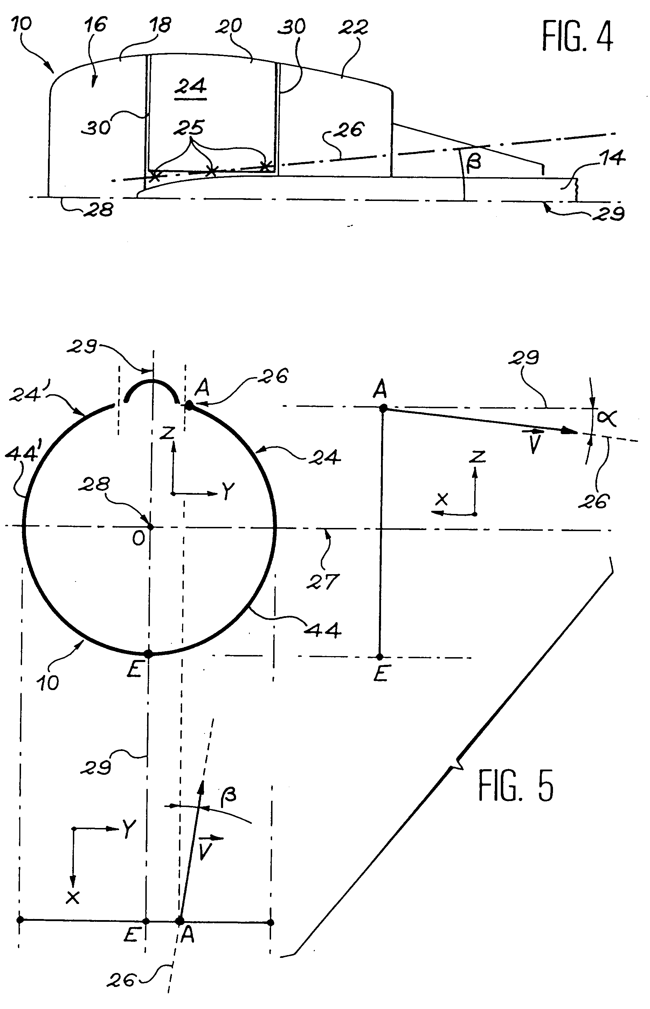

En vol, lorsque les capots sont fermés, les charges aérodynamiques s'exerçant sur les capots de nacelle sont transmises au mât essentiellement par l'intermédiaire du moteur et de systèmes de fermeture situés à l'avant ou à l'arrière des capots et comportant chacun un ensemble de couteaux et de gorges formant des éléments complémentaires de transmission d'effort. Comme le montre à titre d'exemple la figure 3 qui illustre en coupes transversale et longitudinale un détail du système de fermeture, le bord arrière du capot 24 et un bord 30 du moteur, sont équipés respectivement d'un couteau 34 et d'une gorge 32. Le couteau 34, solidaire du capot 24, vient s'engager dans la gorge 32 et permet de transmettre les efforts vers le moteur. Pour la transmission des efforts appliqués selon l'axe du moteur, les gorges et les couteaux comportent des plages de transmission d'effort référencées 38 et 38' pour la gorge 32 et 40 et 40' pour le couteau 34.

Lors de l'ouverture et de la fermeture des capots de nacelle il apparaît un problème d'alignement entre la partie mobile et la partie fixe des systèmes de fermeture, c'est-à-dire entre chaque couteau 34 et la gorge 32 correspondante. En raison de l'angle $\alpha$ que fait l'axe d'articulation avec le plan horizontal passant par l'axe du moteur, le couteau n'est dans le même plan que la gorge qu'en position fermée du capot, et un décalage apparaît dès que le capot fait un petit angle par rapport à la position fermée.

Ainsi, l'extrémité basse du couteau est décalée vers l'arrière par rapport à la gorge à proximité de leur point d'engagement, c'est-à-dire lorsque le capot fait un petit angle, de l'ordre de 3°, par rapport à sa position fermée sur la nacelle.

Pour faciliter l'engagement, il est d'usage, comme le montre la figure 3, de former un biseau 36 sur au moins l'un des côtés du couteau 34 et/ou de la gorge de façon à autoriser un léger glissement latéral de ces parties. Cette caractéristique facilite l'ouverture et la fermeture du capot mais réduit la surface de contact entre couteaux et gorges lorsque le capot est fermé. De plus, en formant un biseau sur les couteaux et/ou dans les gorges, une partie de l'effort axial à transmettre est transformé en un effort radial qui augmente les tensions périphériques sur le capot ainsi que les charges sur les ferrures et les verrous. Par conséquent, la qualité de la transmission des efforts aérodynamique est affectée, ce qui va à l'encontre de la fonction essentielle du système de fermeture.

Un but de la présente invention est donc de proposer une solution au problème de désalignement entre les éléments complémentaires du système de fermeture lors de l'ouverture et de la fermeture du capot.

Exposé de l'invention

Pour atteindre ce but, l'invention concerne plus précisément une nacelle d'un moteur d'aéronef suspendu à un mât de support selon un axe de moteur, la nacelle comportant au moins un capot de nacelle, le capot s'étendant selon une portion de circonférence de la nacelle et comportant des articulations d'ouverture et de fermeture agencées selon un axe d'articulation formant un premier angle $\alpha$, ouvert vers l'avant, respectivement vers l'arrière du moteur, avec un premier plan perpendiculaire à un deuxième plan médian du mât et contenant l'axe du moteur, les bords avant et arrière du capot et les bords adjacents de la nacelle comportant des éléments complémentaires solidaires respectivement du capot et de la nacelle et venant mutuellement en prise lors d'un mouvement de fermeture du capot, caractérisée en ce que l'axe d'articulation forme en outre un deuxième angle $\beta$ non nul ouvert vers l'arrière, respectivement vers l'avant du moteur, avec le deuxième plan pour faire sensiblement coïncider les éléments complémentaires du capot et de la nacelle lors des mouvements d'ouverture et de fermeture du capot.

Grâce à l'invention, l'angle $\beta$ que forme l'axe d'articulation par rapport à un plan sensiblement vertical passant par le mât permet de corriger le désalignement latéral entre les éléments complémentaires du système de fermeture, notamment lors de l'engagement de ces éléments complémentaires, c'est-à-dire lorsque le capot fait un petit angle par rapport à la position où il est verrouillé sur la nacelle, lors de sa fermeture. L'inclinaison selon l'angle $\beta$ permet ainsi de corriger le désalignement provoqué notamment par l'angle $\alpha$ que forme l'axe d'articulation avec un plan horizontal. De plus, la combinaison des angles $\alpha$ et $\beta$ permet de toujours conserver un axe d'articulation s'étendant selon les lignes aérodynamiques de la nacelle.

Selon un aspect de l'invention, les éléments complémentaires solidaires respectivement du capot et de la nacelle comportent respectivement des plages de transmission d'efforts pour des efforts appliqués selon l'axe du moteur, ces plages s'étendant sensiblement le long des bords avant et arrière du capot et le long des bords adjacents de la nacelle. Ces plages sont respectivement délimitées, sur chaque élément complémentaire, par une arête extérieure et une arête intérieure. On entend par arêtes extérieure et intérieure respectivement l'arête la plus éloignée et l'arête la plus proche de l'axe du moteur.

La valeur de l'angle $\beta$ peut, conformément à l'invention être choisi de manière que la composante selon un axe X, parallèle à l'axe de moteur du produit vectoriel d'un vecteur $\vec{V}$ définissant l'axe d'articulation par un vecteur $\overrightarrow{AE}$ soit sensiblement nulle, le vecteur $\overrightarrow{AE}$ étant formé par un bipoint situé dans un plan de référence sensiblement perpendiculaire à l'axe du moteur voisin d'une première plage de transmission d'efforts s'étendant le long du bord avant adjacent de la nacelle, ce bipoint correspondant respectivement à un point A de l'axe d'articulation et à un point E situé à l'extrémité inférieure de l'arête intérieure de ladite première plage.

Lorsque la composante selon l'axe X du vecteur $\vec{V} \wedge \overrightarrow{AE}$ est nulle, le désalignement entre les éléments complémentaires et plus précisément entre les plages de transmission d'efforts est quasiment compensé dans la position d'engagement du capot, c'est-à-dire lorsque celui-ci fait un petit angle par rapport à la position fermée. Selon un choix particulier de la valeur de l'angle $\beta$, celui-ci vérifie sensiblement la formule suivante :

$$((Y_A - Y_E) tg\alpha) + ((Z_A - Z_E) tg\beta) = 0$$

où $Y_A$ et $Y_E$ sont respectivement les coordonnées des points A et E selon un axe Y et où $Z_A$ et $Z_E$ sont respectivement les coordonnées des points A et E selon un axe Z, les axes X, Y et Z formant un repère orthogonal où l'axe Y est parallèle au premier plan et l'axe Z parallèle au second plan.

Selon un exemple particulier, où l'inclinaison de l'axe d'articulation $\alpha$ est de 4,58° l'angle $\beta$ est choisi voisin de 0,6°.

Selon un perfectionnement avantageux de l'invention, l'angle $\beta$ est choisi de manière que la composante selon un axe X, parallèle à l'axe du moteur, du produit vectoriel d'un vecteur $\vec{V}$, définissant l'axe d'articulation, par un vecteur $\overrightarrow{AG}$ soit sensiblement nulle, le vecteur $\overrightarrow{AG}$ étant formé par un bipoint situé dans un plan de référence sensiblement perpendiculaire à l'axe du moteur et voisin d'une première et d'une seconde plages de transmission d'efforts s'étendant le long des bords avant du capot et de la nacelle respectivement, ce bipoint correspondant respectivement à un point A de l'axe d'articulation et à un point G, barycentre géométrique d'un point E et d'un point F, le point E étant situé à l'extrémité inférieure de l'arête intérieure de ladite seconde plage et le point F correspondant à la coïncidence de l'extrémité inférieure de l'arête intérieure de ladite première plage et de l'arête extérieure de ladite seconde plage de transmission d'efforts, lors d'un mouvement de fermeture du capot.

Ainsi, lorsque la composante selon l'axe X du vecteur $\vec{V} \wedge \overrightarrow{AG}$ est sensiblement nulle, le désalignement provoqué par l'inclinaison de l'axe d'articulation est compensé lorsque l'arête intérieure de la plage de transmission d'efforts de l'élément complémentaire solidaire du capot rencontre l'arête extérieure de la plage de transmission d'efforts de l'élément solidaire du moteur. Lorsque les éléments complémentaires comportent un jeu de couteaux et de gorges ceci correspond au moment où les couteaux commencent à s'engager dans les gorges du système de fermeture.

Préférentiellement, l'angle β peut être choisi de manière à sensiblement vérifier la relation :

$$(Y_G - Y_A)tg\alpha + (Z_G - Z_A)tg\beta = 0$$

où $Y_A$ et $Y_G$ sont respectivement les coordonnées des points A et G selon un axe Y et où $Z_A$ et $Z_G$ sont respectivement les coordonnées des points A et G selon un axe Z, les axes X, Y et Z formant un repère orthogonal où l'axe Y est parallèle au premier plan et l'axe Z parallèle au second plan.

D'autres caractéristiques et avantages de l'invention ressortiront de la description qui va suivre, donnée à titre illustratif et non limitatif, en référence aux dessins annexés.

Brève description des figures

- la figure 1, déjà décrite, est une vue schématique latérale d'un propulseur d'aéronef équipé d'une nacelle et montre l'angle α que fait un axe d'articulation d'un capot de nacelle avec un plan horizontal passant par l'axe du propulseur,
- la figure 2, déjà décrite, est une vue schématique partielle de dessus du propulseur de la figure 1 et montre un axe d'articulation parallèle à un plan vertical médian du mât et passant par l'axe du propulseur, cette figure illustrant un art antérieur,
- la figure 3, déjà décrite, montre une coupe transversale schématique d'un détail de la nacelle et du capot et une coupe longitudinale d'un détail d'un système de fermeture du capot sur la nacelle, selon l'art antérieur,
- la figure 4 est une vue comparable à la figure 2 illustrant un propulseur conforme à l'invention, dans lequel l'axe d'articulation du capot de nacelle fait un angle β non nul avec le plan vertical,
- la figure 5 est une représentation schématique simplifiée d'une coupe transversale de la partie centrale du propulseur de la figure 4, et de ses projections,
- la figure 6 est une coupe transversale schématique simplifiée de la partie centrale du propulseur de la figure 4, montrant des plages de transmission d'efforts, et
- la figure 7 un graphe exprimant un désalignement Δ (en mm) des plages de transmission d'efforts en fonction de l'angle θ d'ouverture du capot (en degrés) pour différentes valeurs de l'angle β.

Description détaillée de modes de mise en oeuvre de l'invention

Des références identiques sont utilisées pour des parties identiques ou similaires apparaissant sur différentes figures.

La figure 4 représente un propulseur d'aéronef 10 conforme à l'invention, suspendu à un mât 14, et qui présente une nacelle 16 avec une partie avant 18, une partie centrale 20 et une partie arrière 22.

La partie centrale 20 de la nacelle comporte des capots 24 (dont un seul est visible sur la figure) fixés de façon pivotante, par des articulations 25, au mât 14 de support du propulseur 10.

Les articulations 25 sont agencées selon un axe d'articulation 26 qui forme, comme sur les propulseurs connus, un angle α avec le plan horizontal 27 passant par l'axe du moteur 28. On peut à ce sujet se référer à la figure 1. L'angle α permet à l'axe d'articulation de s'adapter aux lignes aérodynamiques de la nacelle. En général, cet angle est ouvert vers l'avant, c'est-à-dire que l'axe 26 penche vers l'arrière. Selon le type ou le modèle de la nacelle, l'angle α peut varier entre environ 2 et 7 degrés.

Pour limiter, lors de la fermeture et de l'ouverture du capot, les décalages entre des couteaux et des gorges qui constituent des éléments complémentaires d'un système de transmission de contraintes entre le capot 24 et la nacelle 16, conformément à l'invention, l'axe d'articulation 26 forme en outre un deuxième angle β, en général ouvert vers l'arrière, avec un plan 29 médian du mât 14 et contenant l'axe 28 du moteur. Le plan 29 est perpendiculaire au plan 27, sensiblement horizontal, visible sur la figure 1, et les plans 27 et 29 se coupent selon l'axe 28.

La figure 5 montre une coupe transversale très simplifiée de la partie centrale de la nacelle 10, qui comporte deux capots 24 et 24' en position fermée fixés au mat 14 par des articulations. Pour des raisons de simplification de la figure, seules les arêtes intérieures 44, 44' de plages de transmission d'efforts placées à l'avant des capots sont représentés. Les arêtes correspondent, par exemple, au sommet des couteaux qui équipent les bords avant des capots. Par ailleurs, la description qui suit ne concerne que le capot 24 de la partie droite de la figure ; l'invention s'applique toutefois aussi au capot 24'.

Le capot 24 qui s'étend sensiblement sur une demi-circonférence de la nacelle est articulé sur le mât selon l'axe d'articulation 26.

Le point A de la figure 5, visible sur la coupe transversale et sur ses projections, est un point de l'axe d'articulation 26, situé dans un plan de référence perpendiculaire à l'axe 28 du moteur, c'est-à-dire confondu avec le plan de la figure. Le plan de référence est voisin du système de couteaux et de gorges du bord avant du capot.

Le point E également situé dans le plan de référence est placé à l'extrémité inférieure de l'arête intérieure 44.

Un repère orthogonal, dont le sommet O est situé au centre du moteur, est orienté par des axes X, Y et Z s'étendant respectivement vers l'avant, selon l'axe 28 du moteur, selon le plan 27 et selon le plan 29.

Dans ce repère on désigne par $X_A$, $Y_A$, $Z_A$, $X_E$, $Y_E$, $Z_E$ respectivement les coordonnées du point A et du point E selon les directions X, Y et Z.

On considère également le vecteur $\overrightarrow{AE}$ déterminé par le bipoint A et E dont les coordonnées sont ainsi (O, $Y_E$-$Y_A$, $Z_E$-$Z_A$) et un vecteur $\vec{V}$ normalisé définissant l'axe d'articulation 26. Le vecteur $\vec{V}$ forme, conformément à l'invention, un angle $\alpha$ et un angle $\beta$ par rapport aux plans 29 et 27, respectivement ; ses coordonnées sont (1, tg$\beta$, -tg$\alpha$).

Selon une première mise en oeuvre de l'invention, l'angle $\beta$ est choisi de façon à sensiblement annuler la composante selon l'axe X du vecteur $\vec{V}\wedge\overrightarrow{AE}$. Ainsi, l'angle $\beta$ vérifie la relation suivante :

$$(Y_A\text{-}Y_E)\text{tg}\alpha+(Z_A\text{-}Z_E)\text{tg}\beta\simeq0$$

$$\text{soit } \beta\simeq\text{Arctg}\left(\frac{Y_A-Y_E}{Z_E-Z_A}\text{tg}\alpha\right)$$

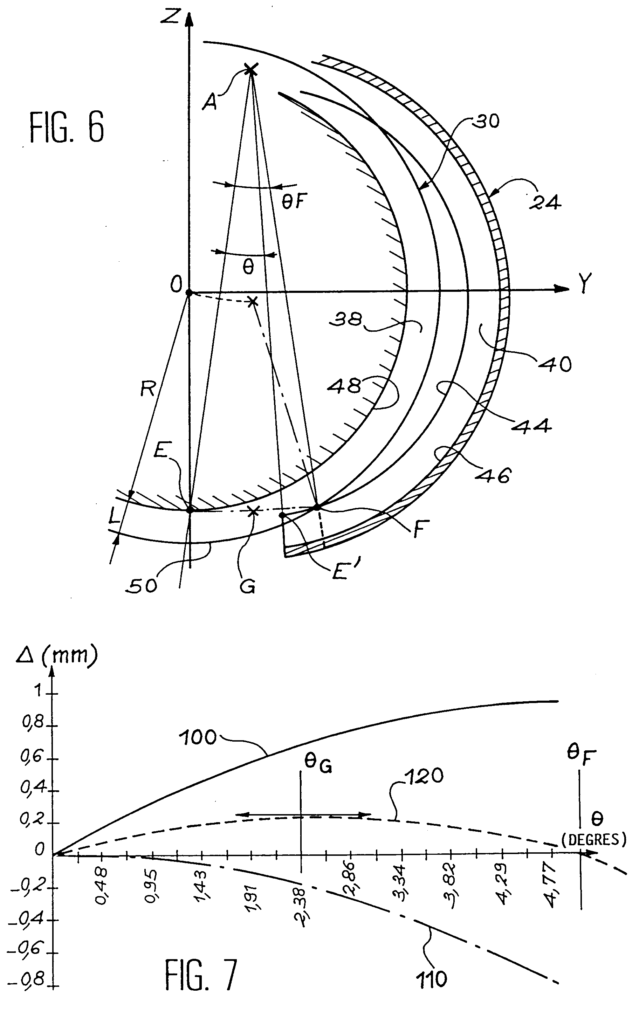

Pour vérifier l'amélioration obtenue grâce à l'invention, il est possible de calculer le décalage selon l'axe X de l'extrémité du capot pour différents angles d'ouverture du capot. Pour l'exposé de ces calculs référence est faite à la figure 6.

La figure 6 représente schématiquement des plages de transmission d'efforts 40, 38 respectivement des éléments complémentaires de fermeture du bord avant du capot 24 et du bord adjacent 30 de la nacelle. Les plages 40, 38 sont délimitées par des arêtes intérieures et extérieures 44, 46, 48, 50 respectivement. A titre d'exemple, les plages 40, 38 sont les flancs respectivement d'un couteau et d'une gorge tels que représentés à la figure 3.

On retrouve sur la figure 6 les points A, E et O définis ci-dessus. Un point E' est défini comme étant situé dans le plan de référence sur l'extrémité inférieure de l'arête intérieure 44 du capot 24. Par ailleurs, le point F correspond à la coïncidence du point E' avec l'arête extérieure 50 de la plage 38 solidaire de la nacelle, lors d'un mouvement d'ouverture ou de fermeture du capot 24. En d'autres termes, le point F correspond, lors de la fermeture du capot, au début de l'engagement des couteaux dans les gorges du système de fermeture déjà décrit.

On désigne par R le rayon de l'arête intérieure 48 et par L la distance séparant les arêtes 44 et 46, et les arêtes 48 et 50 respectivement. L peut être compris comme étant sensiblement la hauteur des couteaux ou la profondeur des gorges.

On désigne enfin par $X_F$, $Y_F$ et $Z_F$ les coordonnées du point F selon les axes X, Y et Z, respectivement. Ainsi les équations suivantes sont vérifiées :

$$Y_F^2 + Z_F^2 = R^2 + 2RL + L^2 \quad \text{(F sur le cercle centré en O de rayon R+L)} \qquad (1)$$

$$(Y_F - Y_A)^2 + (Z_F - Z_A)^2 = Y_A^2 + (Z_A + R)^2 \quad \text{(F sur le cercle centré en A de rayon } \overline{AE}) \qquad (2)$$

En combinant les équations (1) et (2), on obtient :

$$(3) \quad : \quad Z_F = \left(\frac{-Y_A}{Z_A}\right)Y_F + K$$

$$\text{où} \quad K = \frac{RL + L^2/2 - Z_A R}{Z_A}$$

On obtient la valeur de $Y_F$ en résolvant l'équation (1) où l'on a remplacé $Z_F$ par La valeur donnée par l'équation (3). On obtient $X_F$ en remplaçant $Y_F$ par sa valeur dans l'équation (3).

Par ailleurs, on détermine l'angle $\theta_F$ tel que :

$$\theta_F = 2 \arcsin\left(\frac{\frac{\overline{EF}}{2}}{\overline{AE}}\right)$$

où $\overline{EF}$ et $\overline{AE}$ désignent les distances respectives entre les points E et F et entre les points A et E.

Sur la figure 7 sont représentées les valeurs de $X_{E'}$, c'est-à-dire de désalignement $\Delta$ (en mm) de l'extrémité des couteaux et des gorges du capot et de la nacelle pour différentes valeur de $\theta$ (en degrés) comprises entre 0 et un angle $\theta_F$ correspondant à l'angle $E\hat{A}F$. La courbe 100 correspond à un capot où l'angle $\beta$ est nul, c'est-à-dire un capot conforme à l'état de l'art. La courbe 110 correspond à un capot selon le mode de réalisation décrit ci-dessus avec $\alpha=4,75°$ et $\beta=0,41°$. On constate que, notamment pour des faibles valeurs de $\theta$, le désalignement entre l'extrémité du capot et le bord adjacent de la nacelle est très fortement diminué avec un système conforme à l'invention.

Selon un autre mode de mise en oeuvre de l'invention, l'angle $\beta$ est choisi de façon à rendre nulle la composante selon l'axe X du vecteur $\vec{V}\wedge\overrightarrow{AG}$ où le vecteur $\overrightarrow{AG}$ est défini par le bipoint comprenant le point A et le point G, barycentre géométrique des points E et F définis ci-dessus et représentés sur la figure 6.

Les coordonnées $Y_G$ et $Z_G$ du point G selon les axes X et Y sont telles que :

$$Y_G = \frac{Y_E + Y_F}{2} \text{ et } Z_G = \frac{Z_E + Z_F}{2}$$

L'angle $\beta$ est choisi de façon à vérifier la relation suivante :

$$(Y_G - Y_A)\operatorname{tg}\alpha + (Z_G - Z_A)\operatorname{tg}\beta = 0$$

$$\text{soit } \beta = \operatorname{arctg}\left(\frac{Y_G - Y_A}{Z_G - Z_A}\operatorname{tg}\alpha\right)$$

La courbe 120 de la figure 7 donne les valeurs de $X_E'$, c'est-à-dire du désalignement $\Delta$ pour différentes valeurs de $\theta$ compris entre 0 et $\theta_F$ avec un angle $\beta$ déterminé selon l'équation ci-dessus, utilisant le point G. La valeur de l'angle $\beta$ est $\beta=0,21°$ dans le cas de la courbe 120.

La courbe 120, montre que selon la deuxième mise en oeuvre proposée, utilisant le point G pour déterminer l'angle $\beta$, le désalignement de l'extrémité du capot est toujours très faible quel que soit l'angle d'ouverture du capot; de plus, pour des angles d'ouverture du capot supérieurs à $\theta_F$, le désalignement reste faible alors qu'il croît dans le cas de la courbe 110.

Finalement, grâce à l'invention et quel que soit son mode de mise en oeuvre décrit ci-dessus, il est possible d'aligner quasi parfaitement le capot de la nacelle avec les bords adjacents de la nacelle et ce, en particulier, pour des petits angles d'ouverture $\theta$ du capot qui correspondent à l'engagement des couteaux dans les gorges du système de fermeture et de transmission des charges aérodynamiques.

On comprend que dans une variante de réalisation le ou les couteaux peuvent également être solidaires du moteur tandis que les gorges sont solidaires du capot.

## Revendications

1. Nacelle (16) d'un moteur d'aéronef (10) suspendu à un mât (14) de support selon un axe de moteur (28), la nacelle (16) comportant au moins un capot de nacelle (24), le capot (24) s'étendant selon une portion de circonférence de la nacelle et comportant des articulations (25) d'ouverture et de fermeture agencées selon un axe d'articulation (26) formant un premier angle $\alpha$ ouvert vers l'avant, respectivement vers l'arrière du moteur avec un premier plan (27) perpendiculaire à un deuxième (29) plan médian du mât (14) et contenant l'axe (28) du moteur (10), les bords avant et arrière du capot et les bords adjacents de la nacelle comportant des éléments complémentaires solidaires respectivement du capot et de la nacelle et venant mutuellement en prise lors d'un mouvement de fermeture du capot, caractérisée en ce que l'axe d'articulation (26) forme en outre un deuxième angle $\beta$ non nul ouvert vers l'arrière, respectivement vers l'avant du moteur avec le deuxième (29) plan pour faire sensiblement coïncider les éléments complémentaires du capot (24) et de la nacelle lors des mouvements d'ouverture et de fermeture du capot.

2. Nacelle selon la revendication 1, caractérisée en ce que les éléments complémentaires solidaires respectivement du capot et de la nacelle comportent respectivement des plages de transmission d'efforts (40, 38) pour des efforts appliqués selon l'axe (28) du moteur, ces plages s'étendant sensiblement le long des bords avant et arrière du capot et le long des bords adjacents (30) de la nacelle (10), et ces plages étant respectivement délimitées sur chaque élément complémentaire, par une arête extérieure (46, 50) et une arête intérieure (44, 48).

3. Nacelle selon la revendication 2, caractérisée en ce que la valeur de l'angle $\beta$ est choisie de manière que la composante selon un axe X parallèle à l'axe (28) de moteur, du produit vectoriel d'un vecteur $\vec{V}$ définissant l'axe d'articulation (26) par un vecteur $\vec{AE}$ soit sensiblement nulle, le vecteur $\vec{AE}$ étant formé par un bipoint situé dans un plan de référence sensiblement perpendiculaire à l'axe du moteur et voisin d'une première plage de transmission d'efforts s'étendant le long du bord avant adjacent de la nacelle, ce bipoint correspondant respectivement à un point A de l'axe d'articulation et à un point E situé à l'extrémité inférieure de l'arête intérieure de ladite première plage.

4. Nacelle selon la revendication 3, caractérisée en ce que l'angle $\beta$ est choisi de manière à vérifier sensiblement la formule suivante :

$$((Y_A - Y_E)tg\alpha) + ((Z_A - Z_E)tg\beta) = 0$$

où $Y_A$ et $Y_E$ sont respectivement les coordonnées des points A et E selon un axe Y et ou $Z_A$ et $Z_E$ sont respectivement les coordonnées des points A et E selon un axe Z, les axes X, Y et Z formant un repère orthogonal où l'axe Y est parallèle au premier plan et l'axe Z parallèle au second plan.

5. Nacelle selon la revendication 1, caractérisée en ce que l'angle $\alpha$ est voisin de 4,58° et que l'angle $\beta$ est voisin de 0,6°.

6. Nacelle selon la revendication 2, caractérisée en ce que la valeur de l'angle $\beta$ est aussi choisie de manière que la composante selon un axe X, parallèle à l'axe (28) de moteur, du produit vectoriel d'un vecteur $\vec{V}$, définissant l'axe d'articulation (26), par un vecteur $\vec{AG}$ soit sensiblement nulle, le vecteur $\vec{AG}$ étant formé par un bipoint situé dans un plan de référence sensiblement perpendiculaire à l'axe du moteur et voisin d'une première (40) et d'une seconde (38) plages de transmission d'efforts s'étendant le long des bords avant du capot (24) et de la nacelle (30) respectivement, ce bipoint correspondant respectivement à un point A de l'axe d'articulation et à un point G, barycentre géométrique d'un point E et d'un point F, le point E étant situé à l'extrémité inférieure de l'arête intérieure (48) de ladite seconde plage (38) et le point F correspondant à la coïncidence de l'extrémité inférieure de l'arête intérieure (44) de ladite première plage (40) et de l'arête extérieure (50) de ladite seconde plage (38) de transmission d'efforts, lors d'un mouvement de fermeture du capot.

**Claims**

1. Pod (16) of an aircraft motor (10) suspended from a support pole (14) along an axis (28) of the motor, the pod (16) comprising at least one pod cowling (24), the cowling (24) extending along a circumference portion of the pod and comprising opening and closing joints (25) disposed along an articulation axis forming a first angle $\alpha$ open towards the front and towards the rear respectively of the motor with a first plane (27) perpendicular to a second median plane (29) of the pole (14) and containing the axis (28) of the motor (10), the front and rear edges of the cowling and the adjacent edges of the pod comprising complementary elements integral with the cowling and pod respectively and mutually engaged at the time of a movement for closing the cowling, characterized in that the articulation axis (26) further forms a second specific angle $\beta$ open towards the rear and the front respectively of the motor with the second plane (29) so as to make the complementary elements of the cowling (24) and pod coincide during the movement for opening and closing the cowling.

2. Pod according to claim 1, characterized in that the complementary elements integral with the cowling and pod respectively comprise stress transmission ranges (40, 38) for the stresses applied along the axis (28) of the motor, these ranges extending approximately along the front and rear edges of the cowling and along the adjacent edges (30) of the pod (10), said ranges being delimited on each complementary element by an outer edge (46, 50) and an internal edge (44, 48) respectively.

3. Pod according to claim 2, characterized in that the value of the angle $\beta$ is selected so that the component along an axis X parallel to the axis (28) of the motor of the vectorial product of a vector $\vec{V}$ defining the articulation axis (26) by a vector $\overrightarrow{AE}$ is approximately nil, the vector $\overrightarrow{AE}$ being formed by a bipoint situated inside a reference plane approximately perpendicular to the axis of the motor and close to a first stress transmission range extending along the adjacent front edge of the pod, this bipoint corresponding respectively to a point A of the articulation axis and to a point E situated at the lower extremity of the internal edge of said first range.

4. Pod according to claim 3, characterized in that the angle $\beta$ is selected so as to approximately verify the following formula:

$$((Y_A - Y_E)tg\alpha + ((Z_A - Z_E) tg\beta) = 0$$

where $Y_A$ and $Y_E$ are respectively the coordinates of the points A and E along an axis Y and where $Z_A$ and $Z_E$ are respectively the coordinates of the points A and E along an axis Z, the axes X, Y and Z forming an orthogonal mark where the axis Y is parallel to the first plane and the axis Z parallel to the second plane.

5. Pod according to claim 1, characterized in that the angle $\alpha$ is close to 4.58° and the angle $\beta$ is close to 0.6°.

6. Pod according to claim 2, characterized in that the value of the angle $\beta$ is also selected so that the component along an axis X parallel to the axis (28) of the motor of the vectorial product of a vector $\vec{V}$ defining the articulation axis (26) by a vector $\overrightarrow{AG}$ is approximately nil, the vector $\overrightarrow{AG}$ being formed by a bipoint situated inside a reference plane approximately perpendicular to the axis of the motor and close to a first (40) stress transmission range and second (38) stress transmission range both extending along the front edges of the cowling (24) and pod (30) respectively, this bipoint corresponding respectively to a point A of the articulation axis and to a point G, the geometric centre of gravity of a point E and a point F, the point E being situated at the lower extremity of the internal edge (48) of said second range (38) and the point F corresponding to the coincidence of the lower extremity of the internal edge (44) of said first range (40) and of the outer edge (50) of said second stress transmission range (38) at the time of a movement for closing the cowling.

**Patentansprüche**

1. Triebwerksgondel (16) eines Flugzeugs (10), aufgehängt an einem Tragmast (14) entsprechend einer Motorachse (28), wobei die Gondel (16) wenigstens eine Gondelhaube (24) umfaßt, die sich über einen Teil des Umfangs der Gondel erstreckt und Öffnungs- und Schließgelenke (25) umfaßt, angeordnet entsprechend einer Gelenkachse (26), die einen ersten, in Richtung Motorvorderseite bzw. Motorhinterseite offenen Winkel $\alpha$ mit einer ersten Ebene (27) bilden, die senkrecht ist zu einer zweiten Ebene (29), die die Achse (28) des Motors (10) enthält und die Mittelebene des Masts (14) ist, wobei die vorderen und hinteren Ränder der Haube und die benachbarten Ränder der Gondel komplementäre, jeweils fest mit der Haube und der Gondel verbundene Element umfassen, die bei einer Schließbewegung der Haube gegenseitig ineinandergreifen,
**dadurch gekennzeichnet,**
das die Gelenkachse (26) außerdem mit der zweiten Ebene (29) einen zweiten Winkel $\beta$ bildet, nicht null und in Richtung Motorvorderseite bzw. Motorhinterseite offen, um die komplementären Elemente der Haube (24) und der Gondel bei den Öffnungs- und Schließbewegungen der Haube im wesentlichen in Übereinstimmung zu bringen.

2. Gondel nach Anspruch 1, dadurch gekennzeichnet, daß die jeweils mit der Haube und mit der Gondel fest verbundenen komplementären Elemente jeweils Kräfteübertragungsbereiche (40, 38) für die in Richtung der Motorachse (28) angewandten bzw. auftretenden Kräfte umfassen, wobei diese Bereiche sich im wesentlichen längs des vorderen und hinteren Rands und längs des benachbarten Rands (30) der Gondel (10) erstrecken, und diese Bereiche dabei jeweils auf jedem komplementären Element abgegrenzt sind durch eine Außenkante (46, 50) und eine Innenkante (44, 48).

3. Gondel nach Anspruch 2, dadurch gekennzeichnet, daß der Wert des Winkels $\beta$ so gewählt wird, daß die Komponente in Richtung einer zur Motorachse (28) parallelen Achse X des vektoriellen Produkts eines die Gelenkachse (26) definierenden Vektors $\vec{V}$ mal einem Vektor $\overrightarrow{AE}$ im wesentlichen null ist, wobei der Vektor $\overrightarrow{AE}$ durch einen Doppelpunkt gebildet wird, der sich in einer Bezugsebene befindet, die im wesentlichen zu der Motorachse senkrecht ist und einem ersten Kräfteübertragungsbereich benachbart, der sich längs des angrenzenden vorderen Rands der Gondel erstreckt, und dieser Doppelpunkt jeweils einem Punkt A der Gelenkachse und einem Punkt E entspricht, der sich am unteren Ende der Innenkante des genannten ersten Bereichs befindet.

4. Gondel nach Anspruch 3, dadurch gekennzeichnet, daß der Winkel $\beta$ gewählt wird, um im wesentlichen die folgende Formel zu verifizieren:

$$((Y_A - Y_E)tg\alpha + ((Z_A - Z_E)tg\beta) = 0$$

wo $Y_A$ und $Y_E$ jeweils die Koordinaten der Punkte A und E entsprechend einer Achse Y sind, und $Z_A$ und $Z_E$ jeweils die Koordinaten der Punkte A und E entsprechend einer Achse Z sind, wobei die Achsen X, Y und Z ein rechtwinkliges Bezugssystem bilden, wo die Achse Y parallel zur ersten Ebene ist und die Achse Z parallel zur zweiten Ebene.

5. Gondel nach Anspruch 1, dadurch gekennzeichnet, daß der Winkel $\alpha$, ungefähr 4,58° beträgt und der Winkel $\beta$ ungefähr 0,6°.

6. Gondel nach Anspruch 2, dadurch gekennzeichnet, daß der Wert des Winkels $\beta$ auch so gewählt wird, daß die Komponente in Richtung einer zu der Motorachse (28) parallelen Achse X des vektoriellen Produkts eines die Gelenkachse (26) definierenden Vektors $\vec{V}$ mal einem Vektor $\overrightarrow{AG}$ im wesentlichen null ist, wobei der Vektor $\overrightarrow{AG}$ durch einen Doppelpunkt gebildet wird, der sich in einer Bezugsebene befindet, die im wesentlichen zu der Motorachse senkrecht ist und einem ersten (40) und einem zweiten Kräfteübertragungsbereich (38) benachbart, die sich jeweils längs der vorderen Ränder der Haube (24) und der Gondel (30) erstrecken; dabei entspricht dieser Doppelpunkt jeweils einem Punkt A der Gelenkachse und einem Punkt G, geometrischer Schwerpunkt eines Punkts E und eines Punkts F, wobei sich bei einer Schließbewegung der Haube der Punkt E am unteren Ende der Innenkante (48) des genannten zweiten Bereichs (38) befindet und der Punkt F der Übereinstimmung des unteren Endes der Innenkante (44) des genannten ersten Bereichs (40) und der Außenkante (50) des genannten zweiten Kräfteübertragungsbereich (38) entspricht.

FIG. 1

FIG. 2

FIG. 3

FIG. 4

FIG. 5

FIG. 6

FIG. 7